# EUROPEAN PATENT SPECIFICATION

(11) **EP 1 756 682 B1**
(45) Date of publication and mention of the grant of the patent: **02.03.2011**
(21) Application number: 05729117.1
(22) Date of filing: 24.03.2005
(51) Int. Cl.: G05B 19/4063, B25J 9/16

(54) **CONTROL SYSTEM FOR AN INDUSTRIAL ROBOT**
STEUERSYSTEM FÜR EINEN INDUSTRIEROBOTER
SYSTEME DE CONTROLE POUR ROBOT INDUSTRIEL

(30) Priority: 17.06.2004 US 580338 P
(43) Date of publication of application: 28.02.2007
(73) Proprietor: ABB AB, 721 83 Västerås (SE)
(72) Inventor: JOHANSSON, Sven-Erik, S-722 41 Västerås (SE); DAHLGREN, Roger, S-723 53 Västerås (SE)
(74) Representative: Reyier, Ann-Mari
(86) International application number: PCT/EP2005/003190
(87) International publication number: WO 2005/124482

(56) References cited:
- EP-A- 1 186 386
- EP-A- 1 262 847
- DE-A1- 10 300 605
- US-A- 5 715 388

## Description

The present invention relates to a control system for an industrial robot and a method for controlling an industrial robot.

### PRIOR ART

An industrial robot includes a manipulator and a control system having means for operating the manipulator. The manipulator is for example a moveable arm, or a mechanical device that performs the work of the robot. The control system comprises program storage for storing one or more robot programs for controlling the movement of the manipulator. The robot program comprises a series of program instructions written in a robot language, and describes what the robot is to do. The robot program normally includes movement instructions for the manipulator.

The control system further comprises at least one program executer for executing the robot programs and to provide orders based on said program instructions, and one or more performing units adapted to receive the orders from the program executer and to carry out the orders. The program executer is sometimes also denoted a translator, since it translates the high level program language of the robot program to a lower level program language, which can be understood by the performing units. Said order comprises an instruction to the performing unit about the task to be carried out, and information to be used for carrying out the instruction. The orders are given in a low level language, understandable for the performing unit.

The program executer runs the robot program by executing the stored robot program instructions, and sends the orders to the performing units in response to the executed instructions. The program executer also comprises a program pointer that points at the currently executed program instruction. During operation the program executer executes a first program instruction and sends an order corresponding to the first program instruction to the performing units, and then the program executer moves the program pointer to the next program instruction and begins to process the next instruction.

The performing unit is for example a path planner adapted to receive said orders from the program executer and on basis thereof determine how the manipulator should move in order to be able to execute the movement instructions. The path planner plans how the instructed movement should be performed by computing joint angles for the axis of the robot. The joint angels are then converted into motor references. The path planner transmits the computed motor references further to one or more drive modules, such as servomechanisms, to drive the manipulator in accordance with the movement instructions. The performing unit can also be a path process unit handling an application process along a movement segment.

The robot program may comprise more than one program routine. Examples of program routines are the main program routine, subroutines, and functions. A program routine may also contain calls to other routines. If such another routine is called, the program pointer is moved to the called routine and the instructions of that routine are executed. If this second routine also comprises a call to another routine, the program pointer is moved into this third routine, and so on. When the called routine has been executed, the program pointer is moved back to the calling routine. Thus a chain of routines calling each other is created, which lasts until all routines have been executed. Technically, when a routine is executed, its variables, values, and instructions are loaded into and processed in a swift memory called a stack. When a second routine is called, the values and instructions of the first routine are left remaining in the stack. The second called routine is then loaded into a following part of the stack and is processed until finished, after which the execution of the first routine is resumed.

It is desirable to make a robot cell, doing some processing like arc welding or other processing, as much automated as possible. When an error occurs in such processing, the robot should automatically recover from that error and continue its process.

Some industrial plants utilize systems comprising a plurality of mechanical units, such as a multiple robot system or a system comprising one robot that cooperates with one or more external axes. The complexity is raised for such multi robot systems, and especially for synchronized process movements, where the process and movement of each robot are tightly coupled to each other. If one robot stops due to an error, the other robots must also stop its process and movements. An exemple of handling errors occuring in a system including a robot is described in DE10300605A1.

A particular problem in connection with automatic error handling is the raise of asynchronous errors. Such asynchronous errors are difficult to handle in an automatic way. Asynchronous errors arise due to the fact that some program instructions are performed asynchronously, which means that the program pointer is not synchronized with the instruction carried out at the moment. For example, movement instructions have this kind of behavior, but there are others. When the program executer has executed a first movement instruction, and has sent an order to the path planner for planning the movement, the program pointer is moved to the next instruction in the robot program, and the program executer begins to execute the next program instruction. Meanwhile, the path planner performs the planning of the movement. When the path planner has planed the movement, it transmits the computed motor references to the drive modules. When the robot finally performs the movement, the program pointer is several program instructions ahead of the movement instruction currently performed by the robot. If an error occurs during the performing of the movement, the error is an asynchronous error.

Accordingly, an asynchronous error is an error, which is detected when the performing unit is handling an order issued from a first program instruction, while the program executer already has moved forward and begun to execute another program instruction. In such a case the failing order does not correspond to the instruction that is currently being executed by the program executer. A synchronous error on the other hand occurs when the error belongs to the instruction being executed by the program executer.

### SUMMARY OF THE INVENTION

One aspect of the present invention is to provide a control system for an industrial robot, which alleviates the problems with asynchronous errors in connection to automatic error handling.

Another aspect of the present invention is to provide a method for controlling an industrial robot, by which the problems with asynchronous errors in connection to automatic error handling may be reduced.

Yet another object of the present invention is to provide a computer program, which reduces the problem with asynchronous errors in connection to automatic error handling.

Yet another object of the present invention is to provide a computer readable medium, which reduces the problems with asynchronous errors in robot systems in connection to automatic error handling.

These and other aspects are achieved with the control system as defined in claim 1, the method as defined claim 13, the computer readable medium as defined claim 23, and the computer program as defined claim 24.

A program routine may optionally comprise an error handler. An error handler includes program instructions for taking care of errors that may occur during execution of instructions of the routine. Preferably, the error handler is written in a robot language by a robot programmer. The concept of error handlers is described in the international application PCT/SE2004/001948, which is hereby incorporated by reference. One problem with asynchronous errors is that if the asynchronous error is handled as a synchronous error and if the failing program instruction and the executed program instruction belong to different routines, the program executer will execute the error handler in the program routine of the latter instruction instead of the error handler in the routine of the failing instruction. Thus the wrong error handler will be executed, and therefore the error may not become corrected.

The solution to this problem with asynchronous errors is that at least the program instructions that can raise an asynchronous error is tagged with an identifier containing enough information for identifying the routine, which comprises the failing instruction and its environment. When an error is raised, the program executer uses the identifier to jump to that routine and the program execution continues in that routine's error handler. If there is any active instruction when the error was raised, that instruction is temporarily interrupted. When the error is handled, it is possible to either continue from the previously interrupted routine or skip it.

The program executer is adapted to send the identifier, which identifies the program routine comprising the instruction that issued the order, together with the order to the performing units. The performing units are adapted to upon detecting an error, send an error report, including the error and the identifier of the order, which the performing unit was executing when the error occurred, to the program executer. The program executer then runs the error handler of the identified routine, which contained the failing instruction, even if the program executer already has begun to execute another routine, and the program pointer has moved forward and into another routine.

One example of such an identifier is a pointer pointing at the program routine that contained the failing instruction, or pointing at some other entity or data structure which identifies the program routine. Another examples of an identifier is a code number, a code word, or some other suitable code for identifying the program routine, or for identifying a data structure, which in turn identifies the routine.

This solution takes care of synchronous, as well as asynchronous errors. The present invention also makes it possible to handle asynchronous errors in the same context, i.e. with the same stack, routine, local variables etc., as the failing instruction started its execution. This makes a one-to-one relationship between the failing instruction and the error handler, in the same way as it is for instructions that are performed synchronously.

The present invention makes it possible to automate the error handling of the robot. With control systems according to the prior art, an asynchronous error would most likely remain unsolved, meaning that an operator would have to restart the operation of the robot. Since the control system of the present invention is able to recover automatically from asynchronous as well as synchronous errors, the extent of automation can be increased.

Another advantage is that, for a robot programmer, it is more intuitive to program, and easier to adapt an error handler of a routine to handle possible errors originating from the instructions of that particular routine. Otherwise, the programmer would have to implement an error handler to be capable of handling errors for many other types of instructions as well. Thus the programming of the robot will be easier and quicker. Furthermore, less programming code is needed, since the error handler does not need to be able to handle instructions from other routines. Security is also increased since it is easier for the robot programmer to check that the error handler is adapted to handle all errors for all instructions contained in the routine.

The performing units include the units that process the order issued from the program executer, and control the motion and work processes of the manipulator and any tools carried by the manipulator. Examples of performing units are the path planner, calculating the movement path of the manipulator, software and/or hardware processes that controls any tools of the manipulator, a software process that controls or supervise I/O signals of the real application process, such as arc welding, spot welding or dispensing. The error report issued by the performing units comprises an error code, which identifies the type of error and/or the failing performing unit. This means that the processing of the error handler is quicker since the program executer does not need to evaluate or try several approaches in the error handler for a particular failure.

According to one embodiment of the invention, said identifier identifies the instruction in the robot program which issued the order and the program executer is adapted to, upon receiving said error report from the performing units, run the error handler of the routine containing the instruction identified by the received identifier. Thus, not only the routine containing the failing instruction is identified, but also the failing instruction is identified. Since a program routine may include several instructions, which may cause an error, the error handler may comprise instructions for handling a number of possible errors origin from different instructions in the routine. According to this embodiment, is possible to run the part of the error handler that belongs to the failing instruction.

According to one embodiment of the invention said identifier comprises an error recovery point data containing information for pointing out the context in which the instruction that issued the order was executed and the program executer is adapted to run the error handler of the identified program routine in the same context as the context in which the instruction that issued the order was executed. An error recovery point data comprises information necessary for obtaining the context. The error recovery point data comprises, according to one embodiment of the invention, a pointer pointing at the context. In another embodiment the error recovery point data comprises stored information such as the values of variables. The context in which the failing instruction was executed comprises parameters which are pertinent to the instruction and/or error. By pointing out the context, and by using the context during the execution of the error handler and the error recovery process, the probability that the error handler may solve the error, and solve it in a more efficient way, is increased. This since the error recovery will not fail due to any changes in the context. Preferably the context comprises at least local variables and routine calls.

In one preferred embodiment of the invention the program executer comprises a stack for storing data and routine calls and said error recovery point data contains information for pointing out the stack entry for said program routine. The stack stores instructions, routines, and process variables during execution. By pointing at the stack entry of the routine it is not necessary to execute the routine again, since the routine and its values are already present in the stack. Thus there is no risk that the robot will re-perform the instructions of the routine, which have already been executed, the execution of which could lead to malfunctions. The error recovery point data preferably point out said local variables in the stack as well. Thus, the local variables from the first run of the routine will be used during the error recovery, which further reduces the risk for malfunctions. Furthermore, since it is not necessary to execute and store the routine in the stack once again, less computational power is needed, which saves time.

According to one embodiment of the invention, the program executer is adapted to send said identifier, together with orders issued by program instructions that may cause asynchronous errors. Thus the identifier always follows the order through the system of performing units. It is thus ensured that it is possible to identify the routine or program instruction that experienced an error and thus to execute the correct error handler. By sending the identifier mostly with orders that may cause asynchronous errors, and not with instructions that only can cause synchronous errors, it is possible to decrease the amount of transferred data through the system.

According to one embodiment of the invention the program executer is adapted to provide a program pointer, pointing at the program instruction being currently executed, and upon receiving said error report from any of the performing units, determine whether the error is a synchronous or an asynchronous error based on the received identifier and the location of the program pointer, and if the error is a synchronous error the program executer is adapted to run the error handler of the routine being pointed at by the program pointer, and if the error is an asynchronous error, the program executer is adapted to run the error handler of the routine identified by the received identifier. Preferably, the program executer is also adapted to run the error handler in the same context.

It is not necessary to use the identifier to identify the program routine of the failing instruction when a synchronous error occurs, since the program pointer already points at that routine. In this case the correct error handler will be executed anyway. Nor is it necessary to point at the context of the failing instruction, since the program executer is in the context of the failing instruction. Thus the identifier is only used when an asynchronous error has occurred, which saves processing power. Also, the risk that something goes wrong with the error recovery process decreases, since the identifier is not used for identifying the program routine for synchronous errors.

According to one embodiment of the invention the program executer comprises a stack for storing data and routine calls, and if the error is an asynchronous error the program executer is adapted to store the stack and the current location of the program pointer. Thus, no information is lost when the program pointer is moved to the identified routine during execution of its error handler. Preferably the program executer is adapted to, dependent on the result of the execution of an error handler, either restore the stack and move the program pointer back to its stored location, or clear the stack and the program pointer. Preferably the program executer is adapted to restore the stack and move the program pointer back to its stored location if the error is solved. Then the operation of the robot may continue from where it stopped when the error occurred. Thus the error recovery of the robot is quicker since the robot does not need to restart the robot cycle. Preferably the program executer is also adapted to clear the stack and the program pointer if the execution of the error handler fails. Thus the robot cycle will be restarted and an operator can be called to inspect any possible products produced during the cycle.

According to one embodiment of the invention, the program executer is adapted to determine whether the error is a synchronous or an asynchronous error based on said identifier. Preferably, the program executer is adapted to determine whether the error is a synchronous or an asynchronous error based on whether the error report contains said identifier or not. This is advantageous since the error is most likely an asynchronous error if the error report comes from the performing units, and the performing units are adapted to send said identifier with the error report.

According to one embodiment of the invention, the program executer is adapted to check whether the program pointer is located in the routine comprising the instruction identified by the received identifier or not. It is possible for an asynchronous error to occur even though the failing instruction and the currently executed instruction are contained within the same routine. In this case the program executer is adapted to retrieve the context in which the failing program instruction was executed, and execute the error handler in that context.

According to one embodiment of the invention, the control system is adapted to control a plurality of synchronized robots by means of a plurality of robot programs, and at least one program executer adapted to run said plurality of programs and sending orders to a plurality of performing units, each robot having at least one performing unit, the program executer is adapted to provide a plurality of program pointers pointing out the program instructions being currently executed in the robot programs, and to send orders including said identifiers to said performing units, and the performing units are adapted to upon detecting an error, notifying the performing units of the other robots that an error has occurred, and the performing units are adapted to upon receiving an error notification from any of the other performing units, send a report to the program executer including the identifier of the order which the performing unit was executing when the error occurred, and the program executer is adapted to run the error handler of the program routine identified by the received identifier for each of the robot programs.

In some applications it is necessary to use two or more robots to work cooperatively, for example the movements of the robots are synchronized with each other. One problem with such synchronized robots is that if an error occurs within one robot, either a synchronous error or an asynchronous error, the movement of the robot is affected, which in turn affects the other robots as well. Thus an error in one robot will be transmitted to every other synchronized robot. This transmitted error may be in the form of an asynchronous error. Even if the error handler of these other robots does not need to solve, for example, a processing error, the robots need to be stopped, and their work resumed at the same time as the failing robot, and thus it is important that the correct error handler and context is used.

With the control system according to the invention, this problem with transmitted errors is reduced, since the asynchronous errors, which occur within the plurality of robots, are handled by the correct error handlers and in the correct context. The error of the failing robot is handled as described previously. The transmitted error is for each robot handled by the error handler in the routine that contained the program instruction that issued the order that was performed when the robot was notified of the error. Thus, the correct error handlers are used to handle all errors in the assembly.

According to one embodiment of the invention the program executer comprises a plurality of stacks for storing data and routine calls for the robot programs and the program executer is adapted to, for each of the robot programs, determine whether the error is a synchronous or an asynchronous error, and if the error is an asynchronous error store the stack and the current location of the program pointer for the robot program, and in dependence on the execution of the error handler, either restore the stack and move the program pointer back to the stored location, or clear the stack and the program pointer. Accordingly, the plurality of robots continues where the robots were stopped, when the error occurred. Thus the robots do not need to restart the robot cycle at the end of the error recovery process, but may resume work directly.

The control system for the plurality of robots may of course comprise any of the embodiments and/or advantages described in combination with the control system for a single robot.

### BRIEF DESCRIPTION OF THE DRAWINGS

The invention is now to be explained closer as non-limiting examples of the invention and with reference to the appended drawings.
- Fig. 1: shows a robot comprising a control system according to one embodiment of the invention.
- Figs.2a-d: show the control system in fig. 1 at different states according to the invention.
- Fig. 3: shows another example of a control system according to the invention, which controls a plurality of synchronized robots.
- Figs.4a-b: each shows one example of a method according to the invention.

### DETAILED DESCRIPTION OF PREFERRED EMBODIMENTS

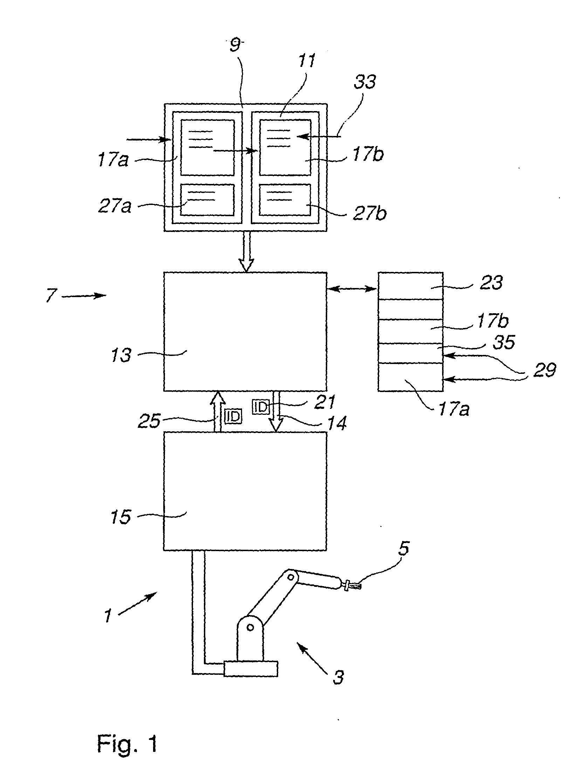

Figure 1 shows a robot 1 comprising a manipulator 3 adapted to carry a tool 5 and a control system 7 for controlling the manipulator 3 and the tool 5. The control system 7 comprises a program storage 9 for storage of a robot program 11, a program executer 13 adapted to execute the stored robot program 11, and one performing unit 15 adapted to control the manipulator 3 and the tool 5. The program executer 13 is adapted to, when running the robot program, send orders 14 to the performing unit 15 in dependence on program instructions in the robot program 11. The performing unit 15 is adapted to process the orders 14 and to control the manipulator 3 and the tool 5 in dependence thereto.

The robot program 11 comprises program routines 17a, 17b, which in turn comprise program instructions. For the sake of clarity the robot program 11 in this example comprises only two routines 17a, 17b, but a robot program may comprise any number of routines. In this example the first routine 17a comprises an instruction that calls the second routine 17b, which is schematically illustrated by an arrow in fig. 1. In practice, a called routine may in turn call a third routine, and so on, such that a chain of called program routines is formed.

A program routine may comprise a task oriented part, containing program instructions for carrying out a task, and an error handler for taking care of errors that may occur during execution of the program instructions in the task oriented part of the routine. Examples of program instructions in the task oriented part are robot instructions describing what the robot is to do, and calculating instructions for calculating variables within the robot program. The robot programmer writes the error handler. Examples of such errors that may occur are an unwanted division by zero, an interruption of a welding process, or that the movement path of the robot is obstructed. The error handler then defines what the robot or program executer is supposed to do, such as to return a maximum number instead of the value of the division with zero expression, or to restart the welding process.

In this example both routines 17a, 17b, comprises an error handler 27a, 27b as well as a task oriented part. The error handlers 27a, 27b comprise instructions for solving any errors that may occur during execution and processing of the robot instructions in the routine.

The program executor 13 also comprises a stack 23, which is arranged to temporarily store variables, routines and routine calls that are executed by the program executor 13. The stack 23 functions as a working memory for the program executor 13, and information in the stack 23 is usually accessed from top to bottom. Since the routine 17a calls routine 17b, the information belonging to the execution of routine 17b is stored on top of the information belonging to routine 17a, while the information belonging to routine 17a remains in the stack 23.

The program executor 13 is adapted to send an identifier 21 together with the order 14 to the performing unit 15. The identifier 21 identifies the program routine comprising the instruction in the robot program 11, which issued the order 14. Furthermore, the performing unit 15 is adapted to detect errors occurring during processing of an order 14, and to, upon detecting an error, send an error report 25 to the program executor 13. In this example the error report 25 includes a code identifying the error that has occurred and the identifier 21, sent together with the order 14, identifying which instruction the performing unit was executing when the error occurred. The performing unit 15 is also adapted to stop the movement and processes of the manipulator 3 and the tool 5, upon detection of the error.

Upon receiving said error report 25 from the performing unit 15 the program executor 13 is adapted to run the error handler of the program routine identified by the received identifier 21. Thus it is ensured that the error handler belonging to the routine that comprises the failing program instruction will be executed, even if the program executor 13 is executing another routine, in this case the second routine.

In fig. 1, as an example, an error occurred when the performing unit 15 processed an order issued by an instruction in the first routine 17a, while the program executer 13 executes an instruction in the second routine 17b. The identifier 21 identifies the first program routine 17a, and thus the program executer 13 runs the error handler 27a of the first routine 17a instead of the error handler 27b of the second routine 17b.

In this example the identifier 21 comprises a pointer 21 pointing at the routine 17a. In another example the identifier may comprise a code number or code word identifying the routine, or the instruction in the routine that issued the order 14.

In this example the identifier comprises an error recovery point data 29 containing information for pointing out the context in which the instruction that issued the order 14 was executed, and the program executor 13 is adapted to run the error handler 27a of the identified program routine 17a in the same context as the context in which the instruction that issued the order 14 was executed. The context comprises information that influences the execution of an instruction. In this example the context comprises at least local variables and routine calls. The program executor 13 is adapted to use the error recovery point data 29 in order to retrieve the correct context, and by using the correct context the probability that an error is solved efficiently increases. In the case of a synchronous error the program executer 13 need not retrieve the context through the error recovery point data 29, since the program executer 13 already is in the correct context.

In this example the error recovery point data 29 contains information for pointing out the stack entry for said program routine 17a. By pointing out the stack entry with said error recovery point data 29 the context of the first routine 27a may be accessed even though the information is not stored at the top of the stack, and hence it is not necessary for the program executor 13 to reload the routine 27a, since it is already present in the stack 23. In this example the stack also comprises local variables 35 belonging to the execution of the program routine 17a, and the error recovery point data 29 also points at the local variables 35 in the stack 23. In this example the error recovery point data 29 also points at the local variables in the stack belonging to the specific program instruction. Thus the program executer 13 executes the error handler in the same context as the context in which the failing program instruction was executed.

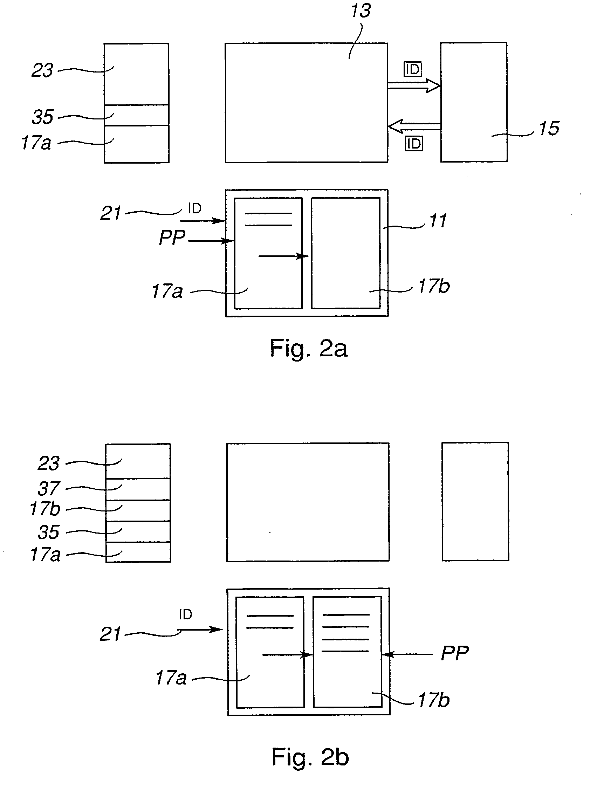

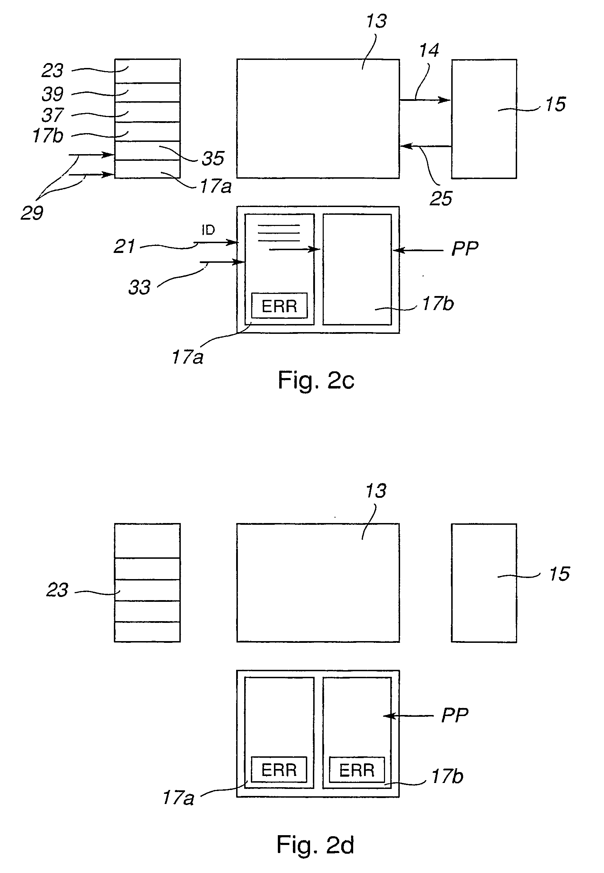

Turning now to figs. 2a-2d, the figures show parts of the control system 7 in different states of the invention. Fig. 2a shows the stack 23 and the program executer 13 in a state during execution of a first instruction in the first program routine 17a. Fig. 2b shows a state during execution of a program instruction in the second program routine 17b. Fig. 2c show a state when an error occurs, and fig. 2d shows a state after a successful error recovery.

In fig. 2a an instruction in the first program routine 17a is executed, and hence the first routine 17a is loaded into the stack 23. The program executor 13 comprises a program pointer pp, which points at the currently executed instruction. The stack 23 further comprises local variables 35 associated with the execution of the first program routine 17a. The first routine 17a comprises a call instruction, which calls routine 17b when executed.

In fig. 2b the program executor has executed the call instruction of the first routine and has thus moved the program pointer pp to the second program routine 17b. The stack therefore also comprises the second program routine 17b and local variables 37 associated with the second routine 17b.

In fig. 2c an error has occurred when the performing unit 15 processed the order 14 issued by an instruction in the first routine 17a. The performing unit 15 has returned an identifier 21, in this case the identifier 21 identifies the first program routine 17a by pointing at the first program routine 17a. The identifier 21 also comprises an error recovering point data 29 pointing at the stack entry for the first routine 17a and the local variables 35 associated with the first routine 17a in the stack 23.

The program executor 13 is adapted to determine whether the error is a synchronous or an asynchronous error based on said identifier 21. In this example the program executer 13 is adapted to determine whether the error is a synchronous or an asynchronous error based on whether the error report contains said identifier 21 or not. In the case that the error report does not contain an identifier 21, the program executer 13 determines that the error is synchronous and directly jumps to the error handler of the presently executed routine.

In this case the error report contains an identifier 21, and thus the program executer 13 determines that the error is an asynchronous error. The program executor 13 is also adapted to compare the received identifier 21 with the location of the program pointer pp (in fig. 2b). In this case the program pointer pp is pointing at the second program routine 17b and the identifier 21 identifies the first program routine 17a. The program executor 13 is then adapted to store the stack 23 and the current location of the program pointer pp. In this case the program executer 13 is adapted to only store the part of the stack which includes information belonging to the second program routine 17b, including the local variables 37. In another example the entire stack 23 is stored. In the case that the program pointer pp points at the first routine 17a, the same routine as the routine identified by the identifier 21, the program executer 13 is adapted to store the part of the stack containing the first routine 17a and the location of the program pointer pp in the first routine 17a.

The program executor 13 is adapted to run the error handler 27a of the first program routine 17a, since the identifier 21 identifies the first routine 17a as the program routine comprising the instruction in the robot program, which issued the failing order 14. The program executer 13 is therefore adapted to move the program pointer pp to the first routine 17a (fig. 2c). The program executor 13 is also adapted to execute the error handler in the same context as the context in which the instruction, which issued the order, was executed. The program executor 13 thus uses the error recovery point data 29 pointing at the first program routine 17a in the stack 23 and the local variables 35 associated to the first program routine 17a in the stack 23. Any further processing variables 39 needed when running the error handler 27a are stored on top of the local variables 37 in the stack 23.

In fig 2d, the state of the stack and the program executer after a successful error recovery is shown. If the program executer 13 is able to solve the error, the program executer 13 restores the stack 23, which is shown in fig. 2d, and moves the program pointer pp back to its stored location, in this case pointing at the second program routine 17b. Thereafter the program executer 13 resumes the execution of the robot program 11. If the program executer 13 is unable to solve the error the program executor 13 instead clears the stack 23 and terminates the execution of the robot program 11.

In the example above only two routines are shown for reasons of simplicity. If the robot program comprises several program routines in a call chain, the further routines are also stored in the stack. They will be stored by the program executer along with routine 17b during the stack storage step (shown in fig. 2c) and will likewise be restored during restoring of the stack (shown in fig 2d).

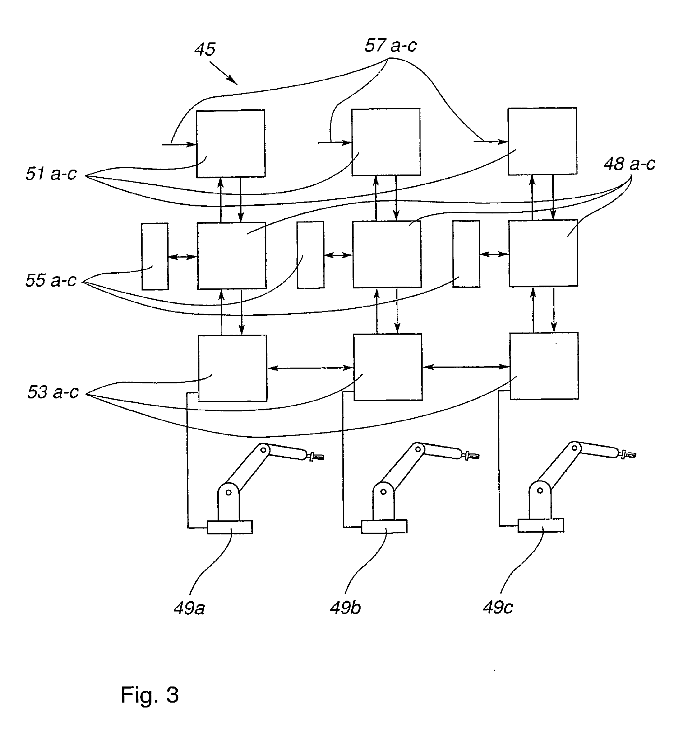

Fig. 3 shows a second example of a control system 45 adapted to control three synchronized manipulators 49a-c. The control system 45 comprises three program executers 48a-c. The program executers 48a-c are adapted to run three robot programs 51a-c and to send orders to three performing units 53a-c. Each robot is provided with at least one performing unit 53a-c. The program executers 48a-c are adapted to provide three program pointers 57a-c pointing out the program instructions being currently executed in the robot programs 51 a-c.

The program executers 48a-c are also adapted to send orders including identifiers to said performing units 53a-c. In this example each identifier identifies the instruction in the robot program, which issued the order with which the identifier is sent. The performing units 53a-c are adapted to, upon detecting an error, notify the performing units 53a-c of the other robots that an error has occurred. The performing units 53a-c are also adapted to, upon receiving an error notification from any of the other performing units 53a-c, send an error report to the assocoated program executer 48a-c including the identifier of the order which the performing unit 53a-c was executing when the error occurred.

The program executors 48a-c are adapted to run the error handler of the program routine identified by the received identifier for each of the robot programs 51a-c. In this example the identifier identifies the instruction in the robot program, but in another example the identifier identifies the program routine, as is done in the control system 7 described with reference to fig. 1 and 2.

The program executers 48a-c also comprise three stacks 55a-c for storing data and routine calls for the robot programs 51a-c. The program executers 48a-c are adapted to, for each of the robot programs 51a-c, determine whether the error is a synchronous or an asynchronous error. If the error is an asynchronous error the program executors 48a-c are adapted to store the stack 55a-c and the current location of the program pointer 57a-c, and in dependence of the execution of the error handler of the identified routine, either restore the stacks 55a-c and move the program pointers 57a-c back to their stored locations or clear the stacks and the program pointer 57a-c.

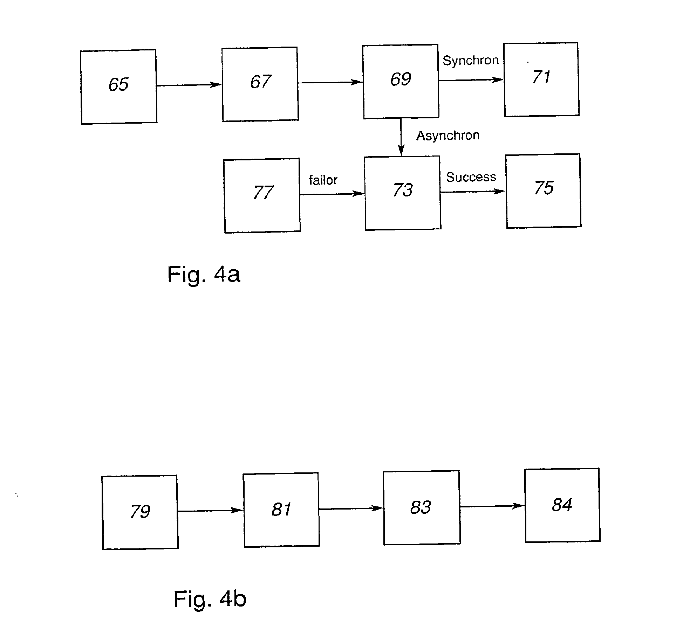

Fig. 4a is a flowchart illustrating the method according to the invention applied to a single robot. In a first step 65, which comprises initiating the operation of the robot, the method comprises storing a robot program comprising one or more program routines including a series of robot program instructions and an error handler for taking care of errors coming up in the program instructions of the program routine.

In a second step 67, which comprises normal operation of the robot and which is repeated until an error occurs, the method comprises running the user program by means of a program executer, executing the stored robot program instructions, providing a program pointer which points at the program instruction currently being executed, issuing orders to one or more performing units depending on the executed instructions, and sending an identifier together with the order, which identifier identifies the program routine in the robot program which issued the order. In a variation the method comprises sending said identifier mostly together with orders issued by program instructions that may cause asynchronous errors.

In a third step 69, an error has occurred and the method comprises sending an error report to the program executer upon detecting the error, the report including the error and the identifier of the order which was executed by the performing unit when the error occurred, determining whether the error is a synchronous or an asynchronous error based on the received identifier upon receiving said error report from any of the performing units, and checking whether the program pointer is located in the routine comprising the instruction identified by the received identifier or not.

If the error is determined as a synchronous error in step 69, the operation of the robot continues with a fourth step 71, in which the method comprises running the error handler of the routine being pointed at by the program pointer.

If, in step 69, the error is determined as an asynchronous error, the operation of the robot continues with a fifth step 73, comprising storing the stack and the current location of the program pointer, running the error handler of the routine identified by the received identifier, and running the error handler of the identified program routine in the same context as the instruction that issued the order was executed.

If, in step 73, the error recovery was successful, the method continues with a sixth step 75, which comprises restoring the stack and moving the program pointer back to its stored location.

If in step 73, the error recovery failed, the method continues with a seventh step 77, which comprises clearing the stack and the program pointer.

Fig. 4b is a flowchart illustrating the method according to the invention applied to a plurality of synchronized robots. In a first step 79, which comprises initiating the operation of the synchronized robots and controlling the plurality of synchronized robots by means of a plurality of robot programs in the absence of errors, the method comprises storing a plurality of robot program comprising one or more program routines including a series of robot program instructions and an error handler for taking care of errors coming up in the program instructions of the program routine. Providing a plurality of program pointers in the program executer, the program pointers pointing out the program instructions being currently executed in the robot programs. Providing a plurality of stacks for storing data and routine calls for the robot programs. Running said plurality of robot programs by means of at least one program executer. Issuing orders, together with identifiers, which identify the program routines, which issued the orders, to a plurality of performing units, and sending the orders including said identifiers to said performing units.

In a second step 81, an error has occurred and the method comprises sending an error notification upon detecting the error to the other performing units, notifying them that an error has occurred. Upon receiving an error notification from any of the other performing units, sending a report to the program executer including the identifier of the order, which the performing unit was executing when the error occurred. In this step the robot, which experienced the error, notifies the other robots that an error has occurred.

In a third error recovery step 83, the method comprises determining whether the error is a synchronous or an asynchronous error. If the error is an asynchronous error the method further comprises, for each of the robot programs, storing the stacks and the current location of the program pointers for the robot program, and running the error handlers of the program routines identified by the received identifiers.

In a fourth step 84, the method comprises, in dependence of the execution of the error handler, either restoring the stacks and moving the program pointers back to their stored locations, or clearing the stacks and the program pointers.

The robots that were notified of the error need not solve any errors themselves in step 83. The error handlers are however designed to allow the synchronized robots to wait until the error of the failing robot is solved, or to terminate the operation if the error recovery fails. In this way the robots will remain synchronized.

The invention is not limited to the embodiments shown in the description, but may be varied within the framework of the following claims. In particular, the described embodiment with a plurality of synchronized robots may include the characteristics shown in the embodiment with only one robot.

## Claims

1. A control system for an industrial robot, the control system comprises: a program storage (9) for storage of at least one robot program comprising one or more program routines (17a, 17b) including a series of robot program instructions, and a program executer (13) adapted to, when running the robot program, execute the stored robot program instructions by sending orders to one or more performing units (15) of the control system, **characterized in that** said program routines (17a, 17b) include error handlers (27a, 27b) for taking care of errors coming up in the program instructions of the program routine, the program executer is adapted to, together with the order, send an identifier (21), which identifies the program routine comprising the instruction in the robot program, which issued the order, and the performing units are adapted to upon detecting an error, send an error report to the program executer, the error report including the error and the identifier sent together with the order, which the performing unit was executing when the error occurred, and the program executer is adapted to upon receiving said error report from any of the performing units, run the error handler of the program routine identified by the received identifier.

2. A control system according to claim 1, **characterized in that** said identifier identifies the instruction in the robot program which issued the order and the program executer is adapted to upon receiving said error report from the performing unit, run the error handler of the routine containing the instruction identified by the received identifier.

3. A control system according to claim 1 or 2, **characterized in that** said identifier comprises error recovery point data containing information for pointing out the context in which the instruction that issued the order was executed and the program executor is adapted to run the error handler of the identified program routine in the same context as the instruction that issued the order was executed.

4. A control system according to claim 3, **characterized in that** the context pointed out comprises at least local variables and routine calls.

5. A control system according to claim 3 or 4, **characterized in that** the program executer comprises a stack for storing data and routine calls and said error recovery point data contains information for pointing out stack entry for said program routine.

6. A control system according to any of the previous claims, **characterized in that** the program executer is adapted to send said identifier, together with orders issued by program instructions that may cause asynchronous errors.

7. A control system according to any of the previous claims, **characterized in that** the program executer is adapted to:
- provide a program pointer, pointing at the program instruction being currently executed,
- upon receiving said error report from any of the performing units, determine whether the error is a synchronous or an asynchronous error based on the received identifier and the location of the program pointer, and if the error is a synchronous error the program executer is adapted to run the error handler of the routine being pointed at by the program pointer, and if the error is an asynchronous error, the program executer is adapted to run the error handler of the routine identified by the received identifier.

8. A control system according to claim 7, **characterized in that** the program executer comprises a stack for storing data and routine calls, and if the error is an asynchronous error the program executer is adapted to store the stack and the current location of the program pointer.

9. A control system according to claim 8, **characterized in that** the program executer is adapted to in dependence of the result of the execution of the error handler, either restore the stack and move the program pointer back to its stored location, or clear the stack and the program pointer.

10. A control system according to any of the claims 7 - 9, **characterized in that** the program executer is adapted to determine whether the error is a synchronous or an asynchronous error based on said identifier.

11. A control system according to any of the previous claims, **characterized in that** the control system is adapted to control a plurality of synchronized robots by means of a plurality of robot programs, and at least one program executer adapted to run said plurality of robot programs and sending orders to a plurality of performing units, each robot having at least one performing unit, the program executer is adapted to provide a plurality of program pointers pointing out the program instructions being currently executed in the robot programs, and to send orders including said identifiers to said performing units, and the performing units are adapted to upon detecting an error, notifying the performing units of the other robots that an error has occurred, and the performing units are adapted to upon receiving an error notification from any of the other performing units, send a report to the program executer including the identifier of the order which the performing unit was executing when the error occurred, and the program executer is adapted to run the error handler of the program routine identified by the received identifier for each of the robot programs.

12. A control system according to claim 11, **characterized in that** the program executer comprises a plurality of stacks for storing data and routine calls for the robot programs, and the program executer is adapted to for each of the robot programs determine whether the error is a synchronous or an asynchronous error and if the error is an asynchronous error store the stack and the current location of the program pointer for the robot program, and in dependence of the execution of the error handler, either restore the stack and move the program pointers back to the its stored location, or clear the stack and the program pointer.

13. A method for controlling an industrial robot, wherein the method comprises:
- storing a robot program comprising one or more program routines including a series of robot program instructions and an error handler for taking care of errors coming up in the program instructions of the program routine,
- running the user program by means of a program executer, executing the stored robot program instructions and issuing orders to one or more performing units,
- sending the order together with an identifier, identifying the program routine in the robot program which issued the order,
- upon detecting an error, sending a report to the program executer, the report including the error and the identifier of the order which was executed by the performing unit when the error occurred, and
- upon receiving said error report, running the error handler of the program routine identified by the received identifier.

14. Method for controlling an industrial robot according to claim 13, wherein said identifier identifies the instruction in the robot program which issued the order and upon receiving said error report, running the error handler of the routine containing the instruction identified by the received identifier.

15. Method for controlling an industrial robot according to claim 13 or 14, wherein said identifier comprises error recovery point data containing information for pointing out the context in which the instruction that issued the order was executed and upon receiving said error report, running the error handler of the identified program routine in the same context as the instruction that issued the order was executed.

16. Method for controlling an industrial robot according to any of the claims 13 - 15, the program executer comprises a stack for storing data and routine calls and said error recovery point data contains information for pointing out stack entry for said program routine.

17. Method for controlling an industrial robot according to any of the claims 13 - 16, comprising sending said identifier, together with orders issued by program instructions that may cause asynchronous errors.

18. A method according to claim any of the claims 13 - 17, comprising:
- providing a program pointer, pointing at the program instruction being currently executed,
- upon receiving said error report from any of the performing units, determining whether the error is a synchronous or an asynchronous error based on the received identifier and the location of the program pointer,
- if the error is a synchronous error, running the error handler of the routine being pointed at by the program pointer,
- if the error is an asynchronous error, running the error handler of the routine identified by the received identifier.

19. A method according to claim 18, wherein the program executer comprises a stack for storing data and routine calls, and the method comprises storing the stack and the current location of the program pointer if the error is an asynchronous error.

20. A method according to claim 19, comprising in dependence of the result of the execution of the error handler, restoring the stack and moving the program pointer back to its stored location or clear the stack and the program pointer.

21. A method according to any of the claims 18 - 20, comprising determining whether the error is a synchronous or an asynchronous error based on said identifier.

22. A method according to any of the claim 13 - 21, for controlling a plurality of synchronized robots by means of a plurality of robot programs, comprising:
- storing a plurality of robot program comprising one or more program routines including a series of robot program instructions and an error handler for taking care of errors coming up in the program instructions of the program routine,
- running said plurality of robot programs running by means of at least one program executer,
- issuing orders, together with an identifiers, identifying the program routine which issued the order, to a plurality of performing units,
- sending the orders including said identifiers to said performing units,
- upon detecting an error, sending an error notification to the other performing units notifying them about that an error has occurred,
- upon receiving an error notification from any of the other performing units, sending a report to the program executer including the identifier of the order which the performing unit was executing when the error occurred,
- for each of the robot programs, running the error handler of the program routine identified by the received identifier.

23. A method according to claim 22, wherein the program executer is providing a plurality of program pointers pointing out the program instructions being currently executed in the robot programs and a plurality of stacks for storing data and routine calls for the robot programs, and the method further comprises for each of the robots:
- determining whether the error is a synchronous or an asynchronous error,
- if the error is an asynchronous error, storing the stack and the current location of the program pointer for the robot program, and
- in dependence of the execution of the error handler, either restore the stack and move the program pointers back to its stored location, or clear the stack and the program pointer.

24. A computer program directly loadable into the internal memory of a computer, comprising software for performing the steps of any of the claims 13 - 23

25. A computer readable medium, having a program recorded thereon, where the program is to make a computer perform the steps of any of the claims 13 - 23, when said program is run on the computer.

## Patentansprüche

1. Steuersystem für einen Industrieroboter, wobei das Steuersystem aufweist:
einen Programmspeicher (9) zum Speichern von mindestens einem Roboterprogramm, das eine oder mehrere Programmroutinen (17a, 17b) einschließlich einer Reihe von Roboterprogramminstruktionen enthält, und einen Programmausführer (13), der dazu ausgelegt ist, die gespeicherten Roboterprogramminstruktionen durch Senden von Aufträgen zu einer oder mehreren Ausführungseinheiten (15) des Steuersystems auszuführen, wenn er das Roboterprogramm laufen lässt, **dadurch gekennzeichnet, dass** die Programmroutinen (17a, 17b) Fehlerbehandfungsroutinen (27a, 27b) zum Behandeln von Fehlern enthalten, die in den Programminstruktionen der Programmroutine auftreten, wobei der Programmausführer dazu ausgelegt ist, zusammen mit dem Auftrag einen Identifizierer (21) zu senden, der die Programmroutine identifiziert, die die Instruktion in dem Roboterprogramm, das den Auftrag ausgegeben hat, aufweist, und dass die Ausführungseinheiten dazu ausgelegt sind, auf die Erfassung eines Fehlers hin einen Fehlerbericht an den Programmausführer zu senden, wobei der Fehlerbericht den Fehler und den Identifizierer enthält, der zusammen mit dem Auftrag gesendet wurde, der durch die Ausführungseinheit ausgeführt wurde, als der Fehler aufgetreten war, und dass der Programmausführer dazu ausgelegt ist, auf den Empfang des Fehlerberichts von irgendeiner der Ausführungseinheiten hin die Fehlerbehandlungsroutine der Programmroutine, die durch den empfangenen Identifizierer identifiziert wird, auszuführen.

2. Steuersystem nach Anspruch 1, **dadurch gekennzeichnet, dass** der Identifizierer die Instruktion in dem Roboterprogramm identifiziert, das den Auftrag ausgegeben hat, und der Programmausführer dazu ausgelegt ist, auf den Empfang des Fehlerberichts von der Ausführungseinheit hin die Fehlerbehandlungsroutine der Routine, die die Instruktion enthält, die durch den empfangenen Identifizierer identifiziert ist, auszuführen.

3. Steuersystem nach Anspruch 1 oder 2, **dadurch gekennzeichnet, dass** der Identifizierer Fehlerbehebungspunktdaten aufweist, die Informationen zum Aufzeigen des Kontexts enthalten, in dem die Instruktion, die den Auftrag ausgegeben hat, ausgeführt wurde, und der Programmausführer dazu ausgelegt ist, die Fehlerbehandlungsroutine der identifizierten Programmroutine in dem gleichen Kontext wie die Instruktion, die den Auftrag ausgegeben hat, auszuführen.

4. Steuersystem nach Anspruch 3, **dadurch gekennzeichnet, dass** der aufgezeigte Kontext mindestens lokale Variable und Routineaufrufe umfasst.

5. Steuersystem nach Anspruch 3 oder 4, **dadurch gekennzeichnet, dass** der Programmausführer einen Stapel zum Speichern von Daten und Routineaufrufen aufweist, und dass die Fehlerbehebungspunktdaten Informationen zum Aufzeigen von einem Stapeleintrag für die besagte Programmroutine enthalten.

6. Steuersystem nach einem der vorhergehenden Ansprüche, **dadurch gekennzeichnet, dass** der Programmausführer dazu ausgelegt ist, den Identifizieren zusammen mit Aufträgen zu senden, die durch Programminstruktionen ausgegeben werden, die asynchrone Fehler verursachen können.

7. Steuersystem nach einem der vorhergehenden Ansprüche, **dadurch gekennzeichnet, dass** der Programmausführer dazu ausgelegt ist:
- einen Programmzeiger bereitzustellen, der auf die Programminstruktion zeigt, die gegenwärtig ausgeführt wird,
- auf den Empfang des Fehlerberichts von irgendeiner der Ausführungseinheiten hin zu ermitteln, ob der Fehler ein synchroner oder ein asynchroner Fehler ist, und zwar auf der Grundlage des empfangenen Identifizierers und des Orts des Pogrammzeigers, und wobei der Programmausführer dazu ausgelegt ist, dann, wenn der Fehler ein synchroner Fehler ist, die Fehlerbehandlungsroutine der Routine, auf die durch den Programmzeiger gezeigt wird, laufen zu lassen, und der Programmausführer dazu ausgelegt ist, dann, wenn der Fehler ein asynchroner Fehler ist, die Fehlerbehandlungsroutine der Routine, die durch den empfangenen Identifizierer identifiziert wird, auszuführen.

8. Steuersystem nach Anspruch 7, **dadurch gekennzeichnet, dass** der Programmausführer einen Stapel zum Speichern von Daten und von Routineaufrufen aufweist, und der Programmausführer dazu ausgelegt ist, den Stapel und die gegenwärtige Position des Programmzeigers zu speichern, falls der Fehler ein asynchroner Fehler ist.

9. Steuersystem nach Anspruch 8, **dadurch gekennzeichnet, dass** der Programmausführer dazu ausgelegt ist, in Abhängigkeit von dem Ergebnis der Ausführung der Programmbehandlungsroutine entweder den Stapel wieder herzustellen und den Programmzeiger zurück zu seiner gespeicherten Stelle zu bewegen, oder den Stapel und den Programmzeiger zu löschen.

10. Steuersystem nach einem der Ansprüche 7 bis 9, **dadurch gekennzeichnet, dass** der Programmausführer dazu ausgelegt ist, auf der Basis des Identifzierers zu ermitteln, ob der Fehler ein synchroner oder ein asynchroner Fehler ist.

11. Steuersystem nach einem der vorhergehenden Ansprüche, **dadurch gekennzeichnet, dass** das Steuersystem dazu ausgelegt ist, eine Mehrzahl von synchronisierten Robotern mit Hilfe einer Mehrzahl von Roboterprogrammen und mindestens einem Programmausführer zu steuern, der zum Ausführen der Mehrzahl von Roboterprogrammen und zum Senden der Aufträge zu einer Mehrzahl von Ausführungseinheiten ausgelegt ist, wobei jeder Roboter mindestens eine Ausführungseinheit aufweist, der Programmausführer dazu ausgelegt ist, eine Mehrzahl von Programmzeigern bereitzustellen, die die Programminstruktionen anzeigen, die gegenwärtig in den Roboterprogrammen abgearbeitet werden, und Aufträge einschließlich der Identifzierer zu den Ausführungseinheiten zu senden, und wobei die Ausführungseinheiten dazu ausgelegt sind, auf die Erfassung eines Fehlers hin die Ausführungseinheiten der anderen Roboter davon zu informieren, dass ein Fehler aufgetreten ist, und wobei die Ausführungseinheiten dazu ausgelegt sind, auf den Empfang einer Fehlerbenachrichtigung von einer der anderen Ausführungseinheiten hin einen Bericht an den Programmausführer einschließlich des Identifizierers des Auftrags, der von der Ausführungseinheit ausgeführt wurde, als der Fehler aufgetreten war, zu senden und wobei der Programmausführer dazu ausgelegt ist, die Fehlerbehandlungsroutine der Programmroutine, die durch den empfangenen Identifizierer identifiziert ist, für jedes der Roboterprogramme auszuführen.

12. Steuersystem nach Anspruch 11, **dadurch gekennzeichnet, dass** der Programmausführer eine Mehrzahl von Stapeln zum Speichern von Daten und Routineaufrufen für die Roboterprogramme aufweist, und dass der Programmausführer dazu ausgelegt ist, für jedes der Roboterprogramme zu ermitteln, ob der Fehler ein synchroner Fehler oder ein asynchroner Fehler ist, und, falls der Fehler ein asynchroner Fehler ist, den Stapel und die gegenwärtige Position des Pogrammzeigers für das Roboterprogramm zu speichern, und in Abhängigkeit von der Ausführung der Fehlerbehandlungsroutine entweder den Stapel wieder herzustellen und die Programmzeiger zurück zu ihrer gespeicherten Position zu bewegen, oder den Stapel und den Programmzeiger zu löschen.

13. Verfahren zum Steuern eines Industrieroboters, wobei das Verfahren umfasst:
- Speichern eines Roboterprogramms, das eine oder mehrere Programmroutinen einschließlich einer Reihe von Roboterprogramminstruktionen und einer Fehlerbehandlungsroutine zum Behandeln von Fehlern, die in den Programminstruktionen der Pogrammroutine auftreten, aufweist,
- Ausführen des Benutzerprogramms mit Hilfe eines Programmausführers, der die gespeicherten Roboterprogramminstruktionen ausführt und Aufträge zu einer oder mehreren Ausführungseinheiten ausgibt,
- Senden des Auftrags zusammen mit einem Identifizierer, der die Programmroutine in dem Roboterprogramm identifiziert, die den Auftrag ausgegeben hat,
- Senden eines Berichts an den Programmausführer auf die Erfassung eines Fehlers hin, wobei der Bericht den Fehler und den Identifizierer des Auftrags enthält, der durch die Ausführungseinheit durchgeführt wurde, als der Fehler aufgetreten war, und
- Ausführen der Fehlerbehandlungsroutine der Pogrammroutine, die durch den empfangenen Identifizierer identifiziert wurde, auf den Empfang des Fehlerberichts hin.

14. Verfahren zum Steuern eines Industrieroboters nach Anspruch 13, bei dem der Identifizierer die Instruktion in dem Roboterprogramm identifiziert, die den Auftrag ausgegeben hat, und auf den Empfang des Fehlerberichts hin die Fehlerbehandlungsroutine der Routine, die die Instruktion enthält, die durch den empfangenen Identifizierer identifiziert wurde, ausgeführt wird.

15. Verfahren zum Steuern eines Industrieroboters nach Anspruch 13 oder 14, bei dem der Identifizierer Fehlerbehebungspunktdaten umfasst, die eine Information zum Aufzeigen des Kontexts enthalten, in dem die Instruktion, die den Auftrag ausgegeben hat, ausgeführt wurde, wobei auf den Empfang des Fehlerberichts hin die Fehlerbehandlungsroutine der identifizierten Programmroutine in dem gleichen Kontext ausgeführt wird, in dem auch die Instruktion, die den Auftrag ausgegeben hat, ausgeführt wurde.

16. Verfahren zum Steuern eines Industrieroboters nach einem der Ansprüche 13 bis 15, bei dem der Programmausführer einen Stapel zum Speichern von Daten und von Routineaufrufen aufweist, und bei dem die Fehlerbehebungspunkfidaten eine Information zum Anzeigen eines Stapeleintrags für die besagte Programmroutine enthalten.

17. Verfahren zum Steuern eines Industrieroboters nach einem der Ansprüche 13 bis 16, das das Senden des Identifizierers zusammen mit Aufträgen, die von Programminstruktionen ausgegeben sind, die asynchrone Fehler hervorrufen können, umfasst.

18. Verfahren nach einem der Ansprüche 13 bis 17, das aufweist:
- Bereitstellen eines Programmzeigers, der auf die Programminstruktion zeigt, die ausgeführt wird,
- Ermitteln, auf den Empfang des Fehlerberichts von irgendeiner der Ausführungseinheiten hin, ob der Fehler ein synchroner oder ein asynchroner Fehler ist, auf der Basis des empfangenen Identifizierers und der Position des Programmzeigers,
- Ausführen der Fehlerbehandlungsroutine der Routine, auf die durch den Programmzeiger gezeigt wird, falls der Fehler ein synchroner Fehler ist,
- Ausführen der Fehlerbehandlungsroutine der Routine, die durch den empfangenen Identifizierer identifiziert ist, falls der Fehler ein asynchroner Fehler ist.

19. Verfahren nach Anspruch 18, bei dem der Programmausführer einen Stapel zum Speichern von Daten und Routineaufrufen aufweist, und bei dem das Verfahren das Speichern des Stapels und der aktuellen Position des Programmzeigers, falls der Fehler ein asynchroner Fehler ist, aufweist.

20. Verfahren nach Anspruch 19, das in Abhängigkeit von dem Ergebnis der Ausführung der Fehlerbehandlungsroutine das Wiederherstellen des Stapels und das Bewegen des Programmzeigers zurück zu seiner gespeicherten Position, oder das Löschen des Stapels und des Programmzeigers, umfasst.

21. Verfahren nach einem der Ansprüche 18 bis 20, das das Ermitteln, ob der Fehler ein synchroner oder ein asynchroner Fehler ist, auf der Basis des Identifzierers enthält.

22. Verfahren nach einem der Ansprüche 13 bis 21, zum Steuern einer Mehrzahl von synchronisierten Robotern mit Hilfe einer Mehrzahl von Roboterprogrammen, umfassend:
- Speichern einer Mehrzahl von Roboterprogrammen, die eine oder mehrere Programmroutinen einschließlich einer Reihe von Roboterprogramminstruktionen, und eine Fehlerbehandlungsroutine für die Behandlung von Fehlern umfassen, die in den Programminstruktionen der Programmroutine auftreten,
- Ausführen der Mehrzahl von Roboterprogrammen, die mit Hilfe von mindestens einem Programmausführer ablaufen,
- Ausgeben von Aufträgen zusammen mit einem / mehreren Identifizierern, der bzw. die die Programmroutine identifizieren, die den Auftrag ausgegeben hat, an eine Mehrzahl von Ausführungseinheiten,
- Senden der Aufträge einschließlich der Identifizierer an die Ausführungseinheiten,
- Senden, auf die Erfassung eines Fehlers hin, einer Fehlerbenachrichtigung an die anderen Ausführungseinheiten, durch die sie darüber informiert werden, dass ein Fehler aufgetreten ist,
- Senden, auf den Empfang einer Fehlerbenachrichtigung von irgendeiner der anderen Ausführungseinheiten hin, eines Berichts an den Programmausführer, der den Identifizierer des Auftrags enthält, den die Ausführungseinheit abgearbeitet hatte, als der Fehler aufgetreten war,
- Ausführen der Fehlerbehandlungsroutine der Programmroutine, die durch den empfangenen Identifizierer identifiziert ist, für jedes der Roboterprogramme.

23. Verfahren nach Anspruch 22, bei dem der Programmausführer eine Mehrzahl von Programmzeigern bereitstellt, die auf die Programminstruktionen hinweisen, die gegenwärtig in den Roboterprogrammen ausgeführt werden, und eine Mehrzahl von Stapel zum Speichern von Daten und Routineaufrufen für die Roboterprogramme bereitstellt, und bei dem das Verfahren weiterhin für jeden der Roboter umfasst:
- Ermitteln, ob der Fehler ein synchroner oder ein asynchroner Fehler ist,
- falls der Fehler ein asynchroner Fehler ist, Speichern des Stapels und der gegenwärtigen Position des Programmzeigers für das Roboterprogramm, und
- entweder Wiederherstellen des Stapels und Bewegen der Programmzeiger zurück zu ihrer gespeicherten Position, oder Löschen des Stapels und des Programmzeigers, in Abhängigkeit von der Abarbeitung der Fehlerbehandlungsroutine.

24. Computerprogramm, das direkt in den internen Speicher eines Computers ladbar ist, das Software zum Ausführen der Schritte gemäß irgendeinem der Ansprüche 13 bis 23 umfasst.

25. Computerlesbares Medium, auf dem ein Programm aufgezeichnet ist, wobei das Programm dazu dient, einen Computer zur Ausführung der Schritte gemäß irgendeinem der Ansprüche 13 bis 23 zu veranlassen, wenn das Programm auf dem Computer ausgeführt wird.

## Revendications

1. Système de commande pour un robot industriel, le système de commande comportant : un stockage de programmes (9) en vue du stockage d'au moins un programme de robot comportant une ou plusieurs routines de programme (17a, 17b) incluant une série d'instructions de programmes de robot, et un exécuteur de programme (13) apte à, lors de l'exécution du programme de robot, exécuter les instructions de programme de robot stockées en envoyant des commandes à une ou plusieurs unités de mise en oeuvre (15) du système de commande ;
**caractérisé en ce que** lesdites routines de programme (17a, 17b) incluent des modules de traitement d'erreur (27a, 27b) pour traiter des erreurs rencontrées dans les instructions de programme de la routine de programme, l'exécuteur de programme est apte à, avec la commande, envoyer un identificateur (21), lequel identifie la routine de programme comportant l'instruction dans le programme de robot, lequel à émis la commande, et les unités de mise en oeuvre sont aptes à, suite à la détection d'une erreur, envoyer un rapport d'erreur à l'exécuteur de programme, le rapport d'erreur incluant l'erreur et l'identificateur envoyé avec la commande, que l'unité de mise en oeuvre était en train d'exécuter lorsque l'erreur a été rencontrée, et l'exécuteur de programme est apte à, suite à la réception dudit rapport d'erreur à partir de l'une quelconque des unités de mise en oeuvre, exécuter le module de traitement d'erreur de la routine de programme identifiée par l'identificateur reçu.

2. Système de commande selon la revendication 1, **caractérisé en ce que** l'identificateur identifie l'instruction dans le programme de robot lequel à émis la commande et l'exécuteur de programme est apte à, suite à la réception dudit rapport d'erreur à partir de l'unité de mise en oeuvre, exécuter le module de traitement d'erreur de la routine contenant l'instruction identifiée par l'identificateur reçu.

3. Système de commande selon la revendication 1 ou 2, **caractérisé en ce que** l'identificateur comporte des données de point de reprise sur erreur contenant des informations permettant de pointer vers le contexte dans lequel l'instruction qui a émis la commande a été exécutée et l'exécuteur de programme est apte à exécuter le module de traitement d'erreur de la routine de programme identifiée dans le même contexte que l'instruction qui a émis la commande a été exécutée.

4. Système de commande selon la revendication 3, **caractérisé en ce que** le contexte indiqué en moyen du pointage comporte au moins des variables locales et des appels de routine.

5. Système de commande selon la revendication 3 ou 4, **caractérisé en ce que** l'exécuteur de programme comporte une pile pour stocker des données et des appels de routine et lesdites données de point de reprise sur erreur contiennent des informations destinées à pointer vers une entrée de pile pour ladite routine de programme.

6. Système de commande selon l'une quelconque des revendications précédentes, **caractérisé en ce que** l'exécuteur de programme est apte à envoyer ledit identificateur, avec des commandes émises par les instructions de programme qui pourraient occasionner des erreurs asynchrones.

7. Système de commande selon l'une quelconque des revendications précédentes, **caractérisé en ce que** l'exécuteur de programme est apte à :
- fournir un pointeur de programme, pointant vers l'instruction de programme qui est exécutée à cet instant ;
- suite à la réception dudit rapport d'erreur à partir de l'une quelconque des unités de mise en oeuvre, déterminer si l'erreur est une erreur synchrone ou une erreur asynchrone sur la base de l'identificateur reçu et de l'emplacement du pointeur de programme, et si l'erreur est une erreur synchrone, l'exécuteur de programme est apte à exécuter le module de traitement d'erreur de la routine signalée par pointage par le biais du pointeur de programme, et si l'erreur est une erreur asynchrone, l'exécuteur de programme est apte à exécuter le module de traitement d'erreur de la routine identifiée par l'identificateur reçu.

8. Système de commande selon la revendication 7, **caractérisé en ce que** l'exécuteur de programme comporte une pile pour stocker des données et des appels de routine, et si l'erreur est une erreur asynchrone, l'exécuteur de programme est apte à stocker la pile et l'emplacement en cours du pointeur de programme.

9. Système de commande selon la revendication 8, **caractérisé en ce que** l'exécuteur de programme est apte à, en fonction du résultat de l'exécution du module de traitement d'erreur, restaurer la pile et replacer le pointeur de programme vers son emplacement stocké, ou supprimer la pile et le pointeur de programme.

10. Système de commande selon l'une quelconque des revendications 7 à 9, **caractérisé en ce que** l'exécuteur de programme est apte à déterminer si l'erreur est une erreur synchrone ou une erreur asynchrone sur la base dudit identificateur.

11. Système de commande selon l'une quelconque des revendications précédentes, **caractérisé en ce que** le système de commande est apte à commander une pluralité de robots synchronisés au moyen d'une pluralité de programmes de robot, et d'au moins un exécuteur de programme apte à exécuter ladite pluralité de programmes de robot et à envoyer des commandes à une pluralité d'unités de mise en oeuvre, chaque robot présentant un moins une unité de mise en oeuvre, l'exécuteur de programme est apte à fournir une pluralité de pointeurs de programme pointant vers les instructions de programme qui sont exécutées à cet instant dans les programmes de robot, et à envoyer des commandes incluant lesdits identificateurs auxdites unités de mise en oeuvre, et les unités de mise en oeuvre sont aptes à, suite à la détection d'une erreur, signaler aux unités de mise en oeuvre des autres robots qu'une erreur a été rencontrée, et les unités de mise en oeuvre sont aptes à, suite à la réception d'une notification d'erreur en provenance de l'une quelconque des autres unités de mise en oeuvre, envoyer un rapport à l'exécuteur de programme incluant l'identificateur de la commande que l'unité de mise en oeuvre était en train d'exécuter lorsque l'erreur a été rencontrée, et l'exécuteur de programme est apte à exécuter le module de traitement d'erreur de la routine de programme identifiée par l'identificateur reçu pour chacun des programmes de robot.

12. Système de commande selon la revendication 11, **caractérisé en ce que** l'exécuteur de programme comporte une pluralité de piles pour stocker des données et des appels de routine pour les programmes de robot, et l'exécuteur de programme est apte à, pour chacun des programmes de robot, déterminer si l'erreur est une erreur synchrone ou une erreur asynchrone et si l'erreur est une erreur asynchrone, stocker la pile et l'emplacement en cours du pointeur de programme pour le programme de robot, et en fonction de l'exécution du module de traitement d'erreur, restaurer la pile et replacer les pointeurs de programme vers leur emplacement stocké, ou supprimer la pile et le pointeur de programme.

13. Procédé destiné à commander un robot industriel, dans lequel le procédé comporte les étapes ci-dessous consistant à :
stocker un programme de robot comportant une ou plusieurs routines de programme incluant une série d'instructions de programmes de robot et un module de traitement d'erreur pour traiter des erreurs rencontrées dans les instructions de programme de la routine de programme ;
- exécuter le programme utilisateur au moyen d'un exécuteur de programme, exécutant les instructions de programme de robot stockées et émettant des commandes à une ou plusieurs unités de mise en oeuvre;
- envoyer la commande avec un identificateur, identifiant la routine de programme dans le programme de robot ayant émis la commande ;
- suite à la détection d'une erreur, envoyer un rapport à l'exécuteur de programme, le rapport incluant l'erreur et l'identificateur de la commande qui a été exécutée par l'unité de mise en oeuvre lorsque l'erreur a été rencontrée ; et
- suite à la réception dudit rapport d'erreur, exécuter le module de traitement d'erreur de la routine de programme identifiée par l'identificateur reçu.

14. Procédé destiné à commander un robot industriel selon la revendication 13, dans lequel l'identificateur identifie l'instruction dans le programme de robot lequel à émis la commande et suite à la réception dudit rapport d'erreur, à exécuter le module de traitement d'erreur de la routine contenant l'instruction identifiée par l'identificateur reçu.

15. Procédé destiné à commander un robot industriel selon la revendication 13 ou 14, dans lequel l'identificateur comporte des données de point de reprise sur erreur contenant des informations permettant de pointer vers le contexte dans lequel l'instruction qui a émis la commande a été exécutée, et, suite à la réception dudit rapport d'erreur, à exécuter le module de traitement d'erreur de la routine de programme identifiée dans le même contexte que l'instruction qui a émis la commande a été exécutée.

16. Procédé destiné à commander un robot industriel selon l'une quelconque des revendications 13 à 15, dans lequel l'exécuteur de programme comporte une pile pour stocker des données et des appels de routine et lesdites données de point de reprise sur erreur contiennent des informations destinées à pointer vers une entrée de pile pour ladite routine de programme.

17. Procédé destiné à commander un robot industriel selon l'une quelconque des revendications 13 à 16, comportant l'étape consistant à envoyer ledit identificateur, avec des commandes émises par les instructions de programme qui pourraient occasionner des erreurs asynchrones.

18. Procédé selon l'une quelconque des revendications 13 à 17, comportant les étapes ci-dessous consistant à :
- délivrer un pointeur de programme, pointant vers l'instruction de programme qui est exécutée à cet instant ;
- suite à la réception dudit rapport d'erreur à partir de l'une quelconque des unités de mise en oeuvre, déterminer si l'erreur est une erreur synchrone ou une erreur asynchrone sur la base de l'identificateur reçu et de l'emplacement du pointeur de programme ;
- si l'erreur est une erreur synchrone, exécuter le module de traitement d'erreur de la routine signalée par pointage par le biais du pointeur de programme ;
- si l'erreur est une erreur asynchrone, exécuter le module de traitement d'erreur de la routine identifiée par l'identificateur reçu.

19. Procédé selon la revendication 18, dans lequel l'exécuteur de programme comporte une pile pour stocker des données et des appels de routine, et le procédé comporte l'étape consistant à stocker la pile et l'emplacement en cours du pointeur de programme si l'erreur est une erreur asynchrone.

20. Procédé selon la revendication 19, comportant, en fonction du résultat de l'exécution du module de traitement d'erreur, l'étape consistant à restaurer la pile et replacer le pointeur de programme vers son emplacement stocké, ou supprimer la pile et le pointeur de programme.

21. Procédé selon l'une quelconque des revendications 18 à 20, comportant l'étape consistant à déterminer si l'erreur est une erreur synchrone ou une erreur asynchrone sur la base dudit identificateur.

22. Procédé selon l'une quelconque des revendications 13 à 21, destiné à commander une pluralité de robots synchronisés au moyen d'une pluralité de programmes de robot, comportant les étapes ci-dessous consistant à :
- stocker une pluralité de programmes de robot comportant une ou plusieurs routines de programme incluant une série d'instructions de programmes de robot et un module de traitement d'erreur pour traiter des erreurs rencontrées dans les instructions de programme de la routine de programme ;
- exécuter ladite pluralité de programmes de robot au moyen d'au moins un exécuteur de programme ;
- émettre des commandes, avec des identificateurs, identifiant la routine de programme ayant émis la commande, à une pluralité d'unités de mise en oeuvre ;
- envoyer les commandes incluant lesdits identificateurs auxdites unités de mise en oeuvre,
- suite à la détection d'une erreur, envoyer une notification d'erreur aux autres unités de mise en oeuvre en leur signalant qu'une erreur a été rencontrées ;
- suite à la réception d'une notification d'erreur en provenance de l'une quelconque des autres unités de mise en oeuvre, envoyer un rapport à l'exécuteur de programme incluant l'identificateur de la commande que l'unité de mise en oeuvre était en train d'exécuter lorsque l'erreur a été rencontrées ;
- pour chacun des programmes de robot, exécuter le module de traitement d'erreur de la routine de programme identifiée par l'identificateur reçu.

23. Procédé selon la revendication 22, dans lequel l'exécuteur de programme fournit une pluralité de pointeurs de programme pointant vers les instructions de programme qui sont exécutées à cet instant dans les programmes de robot, et une pluralité de piles pour stocker des données et des appels de routine pour les programmes de robot, et le procédé comporte en outre, pour chacun des robots, les étapes ci-dessous consistant à :
- déterminer si l'erreur est une erreur synchrone ou une erreur asynchrone ;
- si l'erreur est une erreur asynchrone, stocker la pile et l'emplacement en cours du pointeur de programme pour le programme de robot ; et
- en fonction de l'exécution du module de traitement d'erreur, restaurer la pile et replacer les pointeurs de programme vers leur emplacement stocké, ou supprimer la pile et le pointeur de programme.

24. Programme informatique pouvant être chargé directement dans la mémoire interne d'un ordinateur, comportant un logiciel pour mettre en oeuvre les étapes selon l'une quelconque des revendications 13 à 23.

25. Support lisible par un ordinateur, présentant un programme enregistré, dans lequel le programme amène un ordinateur à mettre en oeuvre l'une quelconque des revendications 13 à 23, lorsque ledit programme est exécuté sur l'ordinateur.
